# EUROPÄISCHE PATENTSCHRIFT

(11) **EP 2 264 863 B1**
(45) Veröffentlichungstag und Bekanntmachung des Hinweises auf die Patenterteilung: **08.01.2020**
(21) Anmeldenummer: 10009701.3
(22) Anmeldetag: 11.11.2004
(51) Int. Cl.: H02K 11/00, H02K 1/18, H02K 7/102, H02K 7/116, F16H 1/12, F16H 1/20, H02K 15/14, H02K 11/33, H02K 11/38, H02K 7/106

(54) **KOMPAKTANTRIEB, SPIROPLANGETRIEBE UND VERFAHREN ZUR FERTIGUNG EINES ANTRIEBS**
COMPACT DRIVE
ENTRAINEMENT COMPACT

(30) Priorität: 13.11.2003 DE 10353226; 06.10.2004 WO PCT/EP2004/011150
(43) Veröffentlichungstag der Anmeldung: 22.12.2010
(62) Teilanmeldung aus: 04797828.3
(73) Patentinhaber: SEW-EURODRIVE GmbH & Co. KG, 76646 Bruchsal (DE)
(72) Erfinder: Schmidt, Josef, 76676 Graben-Neudorf (DE); Köhler, Bernhard, 76646 Bruchsal (DE); Leichter, Thomas, 76187 Karlsruhe (DE); Mahlein, Jochen, 76139 Karlsruhe (DE)

(56) Entgegenhaltungen:
- EP-A- 1 049 234
- EP-A1- 0 697 759
- EP-A1- 1 231 701
- EP-A2- 0 993 098
- DE-U1- 29 909 530
- US-A- 4 716 648
- US-A- 5 501 117
- US-A- 5 994 807
- US-B1- 6 169 345
- US-B1- 6 577 034

## Beschreibung

Die Erfindung betrifft einen Kompaktantrieb.

Aus der DE 197 14 784 A1 ist ein Kompaktantrieb bekannt, der einen Elektromotor umfasst, an dessen einer Stirnseite ein Getriebe und an dessen anderer Stirnseite ein Umrichter angeordnet ist. Dabei muss der Elektronikbereich beziehungsweise der Motorbereich gegen das Getriebe abgedichtet werden. Nachteilig ist dabei, dass eine große axiale Länge vorhanden ist und nur an einer Stirnseite des Kompaktantriebs ein Abtrieb zur Verfügung gestellt werden kann.

Aus der JP 2002336305 A ist ein Getriebemotor bekannt, der allerdings keinen Umrichter umfasst. Außerdem gibt es zwischen Getriebe, Motor und Bremse sowie den zugehörigen Gehäuseteilen Schnittstellen, welche präzise gefertigt werden müssen und somit aufwendig und kostspielig sind.

Aus der DE 196 22 396 A1 ist ein Umrichter bekannt, welcher axial an einem Elektromotor hinter dessen Lüfter montiert wird und somit von dessen Lüfterstrom gekühlt wird. Allerdings ist somit ein großer Bauraum notwendig und außerdem ein Lüfter, der Umgebungsluft vorbeileiten können muss.

Au der EP 0 694 203 B1 ist eine piezoelektrische Bremse bekannt.

Aus der DE 102 07 760 ist ein Verstellgetriebe bekannt, das allerdings ein großes Bauvolumen und eine Schnittstelle zum Rotor des Motors hin benötigt.

Aus der DE 198 48 324 A1 ist eine Kupplung bekannt, die allerdings zusätzliche aufwendige und kostspielige Bearbeitungen der drehbar gelagerten Teile erfordert. Insbesondere ist nicht nur die Sonne und die Rotorwelle sondern auch eine Kupplungshülse umfasst. Höhere Anzahl von Teilen bedeuten aber auch höhere Lagerkosten.

Aus der EP 1 081 827 A1 ist ein Elektrowerkzeug bekannt, bei dem ein Getriebe von einem Elektromotor antreibbar ist, wobei allerdings eine aufwendig zu fertigende Schnittstelle zwischen den Gehäuseteilen des Motors und des Getriebes vorgesehen ist.

Aus der DE 43 09 559 ist ein achsversetztes Winkelgetriebe bekannt, also Spiroplangetriebe, welches mit einem Elektromotor verbindbar und von diesem antreibbar ist.

Aus der EP 0 697 759 A1 ist als nächstliegender Stand der Technik ein Motor mit Reduziergetriebe bekannt.

Aus der US 6 169 345 B1 ist ein Kompaktantrieb bekannt.

Aus der US 4 716 648 A ist ein Verfahren zum Sichern eines Stators in einer elektrischen Maschine bekannt.

Aus der EP 0 993 098 A2 ist eine Anordnung zum Regeln eines elektrischen Generators bekannt.

Aus der EP 1 049 234 A2 ist eine Antriebseinheit bekannt.

Aus der EP 1 231 701 A1 ist ein Produktionsverfahren für einen Motor bekannt.

Aus der US 5 501 117 A ist ein kompakt aufgebauter Getriebemotor bekannt.

Aus der DE 299 09 530 U1 ist ein Antrieb für eine Druckmaschine bekannt.

Aus der US 5 994 807 A ist ein elektrischer Aktuator für eine Fahrzeuglenkung bekannt, der als Kompaktantrieb ausgebildet ist, also eine Getriebe, einen Elektromotor und eine elektronische Schaltung umfasst.

Aus der US 6 577 034 B1 ist ein Kompaktantrieb bekannt.

Der Erfindung liegt daher die Aufgabe zugrunde, einen Kompaktantrieb weiterzubilden unter Vermeidung der vorgenannten Nachteile. Insbesondere soll axiale Länge eingespart werden und möglichst viele Abtriebsvarianten, also einseitiger und doppelseitiger Abtrieb ausführbar sein.

Erfindungsgemäß wird die Aufgabe bei dem Kompaktantrieb nach den in Anspruch 1 angegebenen Merkmalen gelöst. Weitere Vorteile ergeben sich aus den Unteransprüchen

Wesentliche Merkmale der Erfindung bei dem Kompaktantrieb sind, dass der Kompaktantrieb zumindest drei Antriebskomponenten, darunter wenigstens ein Elektromotor, ein Getriebe und eine elektronische Schaltung, insbesondere Umrichter, umfasst,
wobei ein zentrales Gehäuseteil vorgesehen ist,
wobei jede Antriebskomponente zur Bildung eines jeweiligen Gehäuses umgeben ist von dem zentralen Gehäuseteil und zumindest einem Gehäusedeckel der jeweiligen Antriebskomponente.

Von Vorteil ist dabei, dass jede Antriebskomponente zumindest zur Wärmeabfuhr mit dem gleichen zentralen Gehäuseteil verbunden ist und somit die Wärme von diesem aufspreizbar ist. Insbesondere ist die Wärme von einer Antriebskomponente einbringbar, welche zu dem jeweiligen Zeitpunkt eine Temperaturspitze hat. Somit ist nicht nur das jeweils eigene Gehäuse der Antriebskomponente zur Wärmeabfuhr verwendbar sondern auch derjenige Materialbereich der gehäusebildend für eine andere, zum selben Zeitpunkt kühlere Komponente ist. Bei niedrigen Motorströmen und hohen Drehzahlen fließt beispielsweise Wärme vom Getriebe zum Motor; bei hohen Motorströmen und niedrigen Drehzahlen fließt die Wärme umgekehrt. Dabei muss die Wärme stets durch das zentrale Gehäuseteil und wird von diesem aufgespreizt.

Erfindungsgemäß ist der Stator des Elektromotors, insbesondere mittels einer Klemmverbindung, mit dem zentralen Gehäuseteil lösbar verbunden, wobei das Blechpaket des Stators des Motors, umfassend Statorwicklungen, im zentralen Gehäuseteil lösbar verbunden ist. Von Vorteil ist dabei, dass das zentrale Gehäuseteil zuerst bearbeitbar ist mit spanender Bearbeitung und anderen Bearbeitungsschritten; danach ist dann der Stator des Motors einführbar und verklemmbar. Somit ist danach kein weiterer Bearbeitungsschritt mehr notwendig. Insbesondere ist dabei vorteilig, dass der Motor wieder lösbar ist und zu Wartungszwecken oder Servicezwecken austauschbar ist. Darüber hinaus ist auch kein Schrumpfverbinden notwendig, da hierbei ein einfaches Lösen nicht ausführbar ist.

Von Vorteil ist dabei, dass der Kompaktantrieb zumindest einen Elektromotor, eine Bremse, ein Getriebe und einen Umrichter umfasst, wobei die Abtriebswelle des Getriebes und die Rotorwelle parallel zueinander angeordnet sind, wobei der Achsabstand von zumindest einer Getriebestufe bestimmt ist, wobei die erste Getriebestufe ein erstes, mit der Rotorwelle verbundenes Verzahnungsteil umfasst und ein mit diesem in Eingriff stehendes, zweites, mit einer Zwischenwelle verbundenes Verzahnungsteil, wobei die Bremse, umfassend zumindest eine Bremsrotorwelle, im Gehäuse des Kompaktantriebs integriert ist, wobei die Bremsrotorwelle parallel zu der Rotorwelle angeordnet ist, wobei die Bremsrotorwelle mit einem Verzahnungsteil verbunden ist, das mit dem zweiten Verzahnungsteil in Eingriff steht.

Von Vorteil ist dabei, dass axiale Baulänge einsparbar ist und einseitiger und doppelseitiger Abtrieb ausführbar ist. Außerdem ist für die Bremsfunktion keine axiale Baulänge notwendig, sondern die Bremse ist parallel anordenbar neben dem Motor. Mittels der Wirkung der Bremse über die Verzahnungsteile ist es weiter ermöglicht, das Nenn-Bremsmoment zu vergrößern oder zu verkleinern.

Bei einer vorteilhaften Ausgestaltung ist der Elektromotor ein Synchronmotor. Von Vorteil ist dabei, dass hochdynamische Positionieraufgaben vom Kompaktantrieb ausführbar sind und/oder ein hohes Drehmoment über den gesamten Drehzahlbereich verfügbar ist.

Bei einer vorteilhaften Ausgestaltung ist der Umrichter seitlich von der Rotorwelle angeordnet. Von Vorteil ist dabei, dass Baulänge einsparbar ist und beide Seiten der Abtriebswelle zugänglich sind, also ein beidseitiger Abtrieb vorsehbar ist.

Bei einer vorteilhaften Ausgestaltung ist der Getriebebereich gegen die Umgebung und gegen den Bereich des Motors sowie gegen den Elektronikraumbereich abgedichtet. Von Vorteil ist dabei, dass der Getriebebereich Schmieröl umfassen darf und die Elektronik sowie die Stator- und Rotorteile geschützt bleiben vor dem Schmiermittel.

Bei einer vorteilhaften Ausgestaltung befinden sich der Getriebebereich, der Bereich des Motors und der Elektronikraumbereich auf einem ungefähr gleichen Temperaturniveau. Von Vorteil ist dabei, dass keine Wärmedämmungen notwendig sind und somit Material, Masse und Kosten einsparbar sind.

Bei einer vorteilhaften Ausgestaltung umfasst der Motor einen an dem einen Ende der Rotorwelle angeordneten Geber. Von Vorteil ist dabei, dass der Kompaktantrieb für Positionieraufgaben verwendbar ist und der Geber vom Gehäuse des Kompaktantriebs geschützt ist. An dem anderen Ende der Rotorwelle ist eine Bremse verbindbar, die ebenfalls vom Gehäuse des Kompaktantriebs schützbar ist.

Bei einer weiteren vorteilhaften Ausführung enthält der Motor keinen Geber, sondern wird die Lage mit Hilfe eines Schätzverfahrens ermittelt wodurch axialer Bauraum eingespart wird.

Von Vorteil ist dabei dass die Rotorwelle ganz im Inneren des Gehäuses bleibt und somit keine Dichtungen von der Rotorwelle zur Umgebung hin notwendig sind. Es genügt somit also ein einziger Wellendichtring, der auf der Rotorwelle läuft. Da die Rotorwelle eine hohe Drehzahl aufweisen kann, ist somit die Wärmeproduktion sehr viel kleiner als bei einem Motor, der zwei Wellendichtringe aufweist, insbesondere an seinen beiden axialen Enden der Rotorwelle.

Die Abtriebswelle weist beispielsweise drei Wellendichtringe auf. Da die Drehzahl aber viel geringer ist als bei der Rotorwelle ist die Gesamtproduktion an Wärme kleiner als bei einer Antriebs-Lösung, bei welcher sowohl die Rotorwelle als auch die Abtriebswelle zwei Wellendichtringe aufweist.

Bei einer vorteilhaften Ausgestaltung des Getriebes wird zumindest eine Stirnradstufe verwendet, wodurch die axiale Baulänge sinkt und eine kostenoptimale Lösung entsteht.

Bei einer vorteilhaften Ausgestaltung wird die Getriebestufe als Verstellgetriebe mit einem variablen Übersetzungsverhältnis ausgeführt, wodurch der Verschleiß der Getriebestufe vom Drehzahlbereich minimiert und die Drehmomentübersetzung an den Belastungsfall angepasst wird. Vorteilhaft ist bei dem Verstellgetriebe, dass sogar alle Dichtungen zum Motorraumbereich entfallen können, da ein Verstellgetriebe, insbesondere ein Breitkeilriemengetriebe, keinen oder nur unwesentliche Mengen von Schmierstoff benötigt. Somit sind nur Dichtungen vom Inneren des Kompaktantriebs zur äußeren Umgebung hin notwendig.

Erfindungsgemäß sind Rotorwelle und mindestens eine Welle des Getriebes im selben Gehäuseteil gelagert. Von Vorteil ist dabei, dass eine genaue Ausrichtung der Wellen zueinander schon bei der Fertigung und Bearbeitung des Gehäuseteils erreichbar ist. Denn das Gehäuseteil wird in nur einer Aufspannung endbearbeitbar und somit die relative Lage der Lagersitze sehr genau zueinander ausrichtbar.

Erfindungsgemäß sind Bremswiderstand und Schmierstoff derart gut wärmeleitend verbunden, dass der Schmierstoff mittels des Bremswiderstandes heizbar ist.

Bei einer vorteilhaften Ausgestaltung ist der Wärmeübergangswiderstand vom Bremswiderstand zum Schmierstoff kleiner ist als vom Bremswiderstand zur Umgebung. Somit ist vorteiligerweise bei niedrigen Umgebungstemperaturen der Antrieb heizbar, indem die elektronische Schaltung den Bremswiderstand genügend bestromt. Die Wärme strömt auf diese Weise hauptsächlich vom Bremswiderstand zum Schmierstoff und erwärmt diesen also in genügender Weise.

Bei einer vorteilhaften Ausgestaltung ist der Wärmeübergangswiderstand von einer der Statorwicklungen zum im Betrieb bewegten Schmierstoff des Getriebes kleiner ist als von der Statorwicklung zur Umgebung. Somit ist Wärme von der Statorwicklung durch das zentrale Gehäuseteil schnell zum Schmierstoff hin abführbar. Dieser wird bewegt und transportiert somit die aufgenommene Wärmemenge an sein Gehäuse. Somit wird die Wärme schnell verteilt. Dazu ist der bloße Betrieb des Antriebs vorteilhaft ausgenutzt. Weiterer vorteiliger Effekt ist somit, dass das zentrale Gehäuseteil und auch der Gehäusedeckel des Getriebes auf ungefähr gleiches Temperaturniveau gebracht sind und somit die Wärmeabfuhr an die Umgebung optimiert ist, weil die Wärme aufgespreizt wird über möglichst viel Gehäuseoberfläche zur Umgebung hin. Des Weiteren steht mit dem zentralen Gehäuseteil und dem Schmierstoff zusammen eine große gemeinsame Wärmekapazität zur Verfügung, die Temperaturspitzen abfangen hilft.

Bei kleiner Drehzahl und insbesondere hohem vom Motor aufgenommenen Strom wird ein durchschnittlicher resultierender Wärmestrom vom Motor zum Stator fließen und dann über das Gehäuse an die Umgebung angeführt werden.

Bei hohen Drehzahlen und insbesondere kleinen vom Motor aufgenommenen Strömen wird ein durchschnittlicher resultierender Wärmestrom vom Stator zum Motor fließen und dann über das Gehäuse an die Umgebung angeführt werden.

Da zwischen dem die elektronische Schaltung, also die Umrichterelektronik, aufnehmendem Gehäusedeckel und dem zentralen Gehäuseteil eine Wärmesperre angeordnet ist, wird die Wärme der Leistungshalbleiter der Endstufe des Umrichters über diesen Gehäusedeckel an die Umgebung abgeführt.

Der Bremswiderstand ist erfindungsgemäß in einer Gehäusetasche des zentralen Gehäuseteils angeordnet und wärmeleitend verbunden, wobei der Bremswiderstand in den Getriebebereich derart hineinragt, dass die Gehäusetasche näher an der eintreibenden als an der abtreibenden Seite angeordnet ist. Vorteilhaft ist der Bremswiderstand elektrisch über einen Steckverbinder mit dem die elektronische Schaltung aufnehmenden Gehäusedeckel lösbar verbindbar.

Bei einer vorteilhaften Ausgestaltung ist der Kompaktantrieb als rechteckiger Quader mit 6 Seiten ausgeführt, wobei Ausnehmungen vorsehbar sind. Insbesondere sind nur eine bis drei Seiten mit Gehäusedeckeln zum Montieren und Warten der Antriebskomponenten vorgesehen. Somit sind die anderen Seiten des Gehäuses des Quaders vom zentralen Gehäuseteil bildbar. Daher ist dann auch die Wärmeabfuhr an die Umgebung verbessert, da das zentrale Gehäuseteil die Wärme der Wärmequellen, wie Bremswiderstand, Bremse, Getriebe und/oder Motor aufspreizt.

Zur erwähnten Aufspreizung der Wärme ist es auch vorteilhaft, dass jede Antriebskomponente zur jeder anderen mittels nur einer Gehäusewandung des zentralen Gehäuseteils getrennt ist. Somit muss die Wärme zu einer anderen kühleren Komponente nur durch diese eine Wand hindurchgeführt werden.

Die elektronische Schaltung ist auch mit dem einen Sensor verbunden, der eine auf das zentrale Gehäuseteil beziehbare Temperatur bestimmbar macht. Auf diese Weise ist mittels der elektronischen Schaltung eine Temperaturüberwachung des Antriebs ausführbar, insbesondere auch eine Energieflussregelung. Denn mittels der elektronischen Schaltung ist der Bremswiderstand bestrombar und somit Wärme zuführbar und es ist auch der Motor mit reduzierter Leistung betreibbar, also die Wärmeproduktion verringerbar. Auch bei einer vorsehbaren Bremsspule der Bremse ist eine Bestromung zur Wärmeabfuhr steuerbar.

Wesentliche Merkmale bei der Spiroplangetriebestufe sind, dass sie für einen Kompaktantrieb vorgesehen ist,
wobei ein zentrales Gehäuseteil vorgesehen ist,
wobei jede Antriebskomponente zur Bildung eines jeweiligen Gehäuses umgeben ist von dem zentralen Gehäuseteil und zumindest einem Gehäusedeckel der jeweiligen Antriebskomponente. Von Vorteil ist dabei, dass das Ritzel der Spiroplangetriebestufe infolge seiner zylindrischen Form nach Montieren nicht mehr eingestellt und justiert werden muss. Außerdem ist wegen des vorhandenen Achsversatzes beim Spiroplangetriebe der Antrieb sehr kompakt ausführbar. Überraschenderweise ist mit einer Spiroplangetriebestufe und einer abtreibenden Stirnradgetriebestufe nicht nur ein insgesamt hoher Wirkungsgrad erzielbar sondern auch eine Reduzierung der Länge in axialer Richtung des Motors, da das Spiroplan-Rad in dazu senkrechter Richtung anordenbar ist und das abtreibende Zahnrad somit näher zum Ritzel und Motor hin vorsehbar ist. Auch eine Hypoidstufe würde ähnliche Vorteile bringen, wobei aber das Ritzel nach Montage eingestellt werden müsste. Wegen der Verwendung des Spiroplangetriebes ist aber das zentrale Gehäuseteil derart formbar und um das Getriebe herum führbar, dass nur ein kleiner Getriebegehäusedeckel notwendig ist und die Montage trotzdem einfach und schnell ausführbar ist.

Die Erfindung wird nun anhand von Abbildungen näher erläutert:

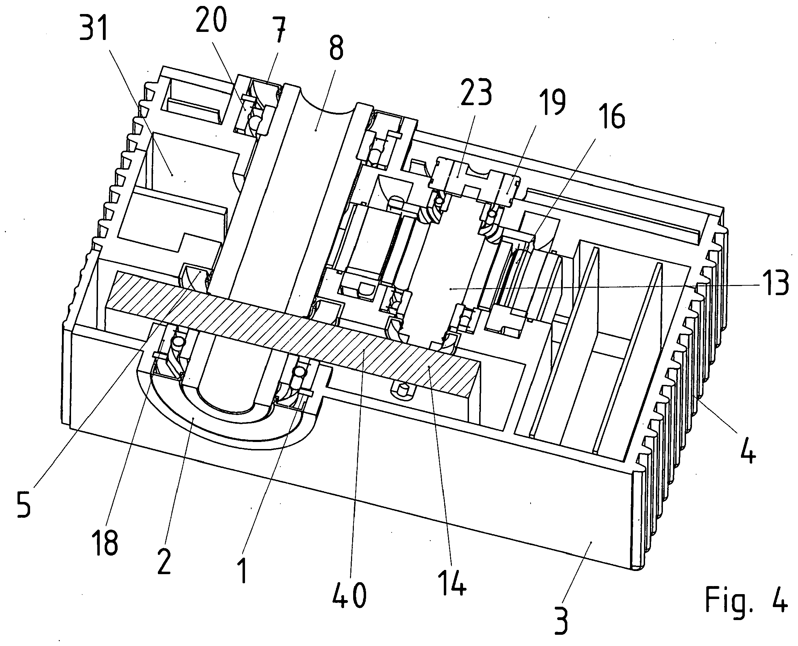

In der Figur 4 ist ein erfindungsgemäßer Kompaktantrieb in Schrägansicht gezeichnet, wobei das Getriebe 40 nur symbolisch angedeutet ist.
In der Figur 1 ist ein erfindungsgemäßer Kompaktantrieb in Schrägansicht gezeichnet.
In der Figur 2 ist ein erfindungsgemäßer Kompaktantrieb angeschnitten gezeigt.
In der Figur 3 ist ein erfindungsgemäßer Kompaktantrieb angeschnitten gezeigt, bei dem im Unterschied zu Figur 2 der Umrichter auf der anderen Seite von der Abtriebswelle als der Motor angeordnet ist.
In der Figuren 5 und 6 sind weitere erfindungsgemäße Ausführungsbeispiele gezeigt.

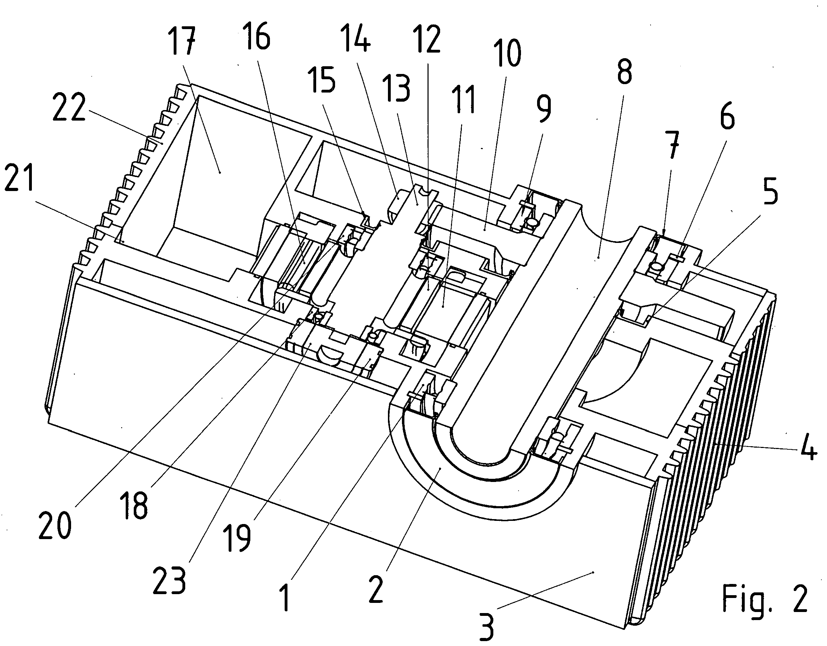

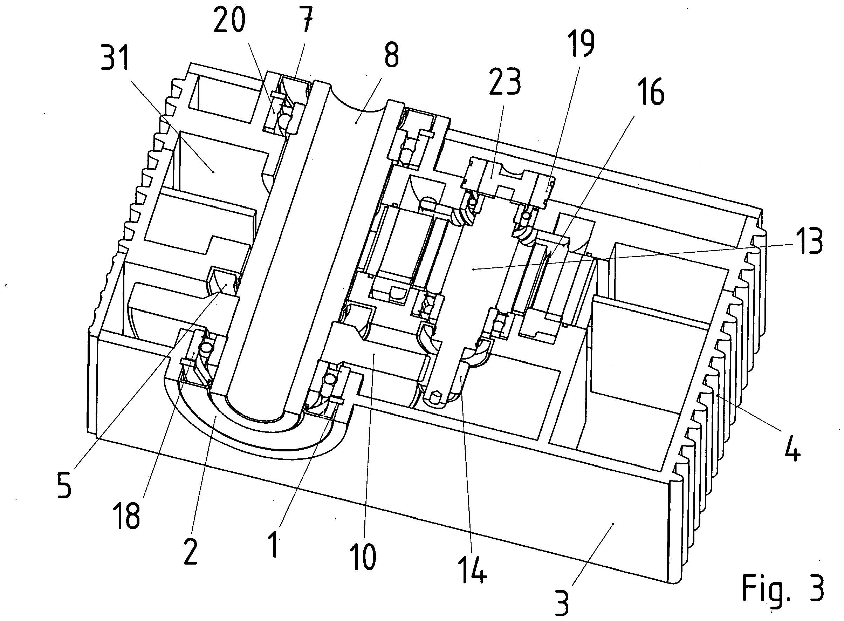

Das symbolisch angedeutete Getriebe in Figur 4 ist bei verschiedenen erfindungsgemäßen Ausführungsvarianten jeweils verschiedenartig ausgeführt. In einer ersten Variante ist es als Stirnradgetriebe ausgeführt, was in den Figuren 2 und 3 auch verdeutlicht ist. In einer anderen Variante ist das Getriebe aus Figur 4 als Verstellgetriebe ausgeführt. Dieses Verstellgetriebe ist entweder in der Art eines VARIMOT-Getriebes der Firma SEW-EURODRIVE ausführbar, also mit zwei aneinander reibenden Scheiben, oder in der Art eines VARIBLOC-Getriebes der Firma SEW-EURODRIVE ausführbar, also als Breitkeilriemengetriebe wobei der Abstand zweier kegeliger Verstellscheiben die Übersetzung bestimmen. Bei einem weiteren erfindungsgemäßen Ausführungsbeispiel ist auch statt eines Keilriemens eine Kette vorteiligerweise verwendbar.

Im erfindungsgemäßen Ausführungsbeispiel nach Figur 2 ist der Motor seitlich von der Abtriebswelle angeordnet. Die Rotorwelle 13 und die Abtriebswelle 8 sind also parallel angeordnet. Der Achsabstand dieser Wellen ist bestimmt durch die Verzahnungsteile der Stirnradgetriebestufe, die aus einem mit der Rotorwelle 13 formschlüssig und/oder kraftschlüssig verbundenen Ritzel 14 und einem als Stirnrad ausgeführten Zahnrad 10, das mit der Abtriebswelle 8 verbunden ist, besteht.

Der Raumbereich des Getriebes, also der Stirnradgetriebestufe, ist von dem Raumbereich des Elektromotors abgedichtet ausgeführt. Der Wellendichtring 15 dichtet diese Raumbereiche an der Rotorwelle ab, da die Rotorwelle im Raumbereich des Motors die Permanentmagnete 12 trägt und im Raumbereich des Getriebes das Ritzel 14. Der Wellendichtring 5 dichtet den Raumbereich des Getriebes vom Raumbereich des Motors an der Abtriebswelle 8 ab, die als Hohlwelle ausgeführt ist.

Bei einem weiteren erfindungsgemäßen Ausführungsbeispiel ist statt der gezeigten Stirnradgetriebestufe ein anderes Getriebe, umfassend mehrere Getriebestufen, einsetzbar.

Bei einem weiteren erfindungsgemäßen Ausführungsbeispiel ist die Abtriebswelle nicht als Hohlwelle sondern als Vollwelle ausgebildet. Des Weiteren besteht auch die Möglichkeit, die Abtriebswelle gemäß der Norm für Roboterschnittstellen auszubilden, wodurch ein sehr kompakter Abtrieb mit geringer axialer Baulänge entsteht.

Die Abtriebswelle 8 ist über das Lager 1 in demselben Gehäuseteil 21 gelagert, in welchem auch die Rotorwelle 13 über das Lager 18 gelagert ist.

Mittels des auf der Abtriebswelle 8 laufenden und in das Gehäusedeckels 3 eingesetzten Wellendichtrings 2 ist der Raumbereich des Motors gegen die Umgebung abgedichtet.

Die Gehäuseteile 21 und 22 sind mit Kühlvorrichtungen 4 versehen zur Abführung der im Motor, Getriebe und Umrichter entstehenden Wärme.

Die Abtriebswelle 8 ist über das andere, axial gegenüber liegende Lager (6,9) wiederum in dem selben Gehäuseteil 22 gelagert, in welchem auch die Rotorwelle 13 über das andere Lager 20 gelagert ist.

Wesentlicher Vorteil bei dem Kompaktantrieb ist, dass keine Kupplung zwischen Motor und Getriebe notwendig ist und somit zusätzliche Teile entfallen. Insbesondere verwenden Motor und Getriebe sogar gleiche Gehäuseteile gemeinsam. Darüber hinaus ist eine genaue Ausrichtung der Wellen zueinander schon bei der Fertigung und Bearbeitung des Gehäuseteils erreichbar, indem Lagersitze für Motor und Getriebe, insbesondere beispielhaft die Lager 9 und 20, in ihrer relativen Lage zueinander beim Herstellen äußerst genau festlegbar sind. Denn das Gehäuseteil wird in nur einer Werkzeugmaschine in einer einzigen Aufspannung endbearbeitbar. Somit ist die relative Lage der Lagersitze sehr genau zueinander ausrichtbar. Weiter vorteilhaft an der gemeinsamen Nutzung eines Gehäuseteils ist auch, dass der Kompaktantrieb auf diese Weise nicht nur ein kleines Bauvolumen benötigt sondern auch eine besonders hohe Stabilität aufweist, da die Kräfte des Motors und des Getriebes innerhalb desselben Gehäuseteils zueinander geleitet werden.

Weiterer Vorteil eines gemeinsam verwendeten, also zentralen, Gehäuseteils ist auch die schnelle Verteilung der Wärme, welche in einem Bereich zugeführt wird, an andere Bereiche. Somit behindern keine Schnittstellen den Wärmeabtransport in Richtung anderer Bereiche. Da die verschiedenen Bereiche stets verschiedene Anteile an Wärmeproduktion aufweisen, ist der größte zugehörige produzierte Wärmequellenstrom schneller über das zentrale Gehäuseteil verteilbar an die anderen Bereiche. Dieses Aufspreizen der Wärme hat weiter zum Vorteil, dass eine sehr große Oberfläche für die Wärmeabfuhr an die Umgebung zur Verfügung steht. Daher sind sogar spezielle aufwendige und kostspielige Kühlvorrichtungen einsparbar, wie beispielsweise Kühlfinger und/oder Kühlrippen. Darüber hinaus ist das Gehäuse im Wesentlichen glatt ausführbar, so dass Flüssigkeiten schnell und leicht abfließen können.

Mittels des auf der Abtriebswelle 8 laufenden und in das Gehäuseteil 22 eingesetzten Wellendichtrings 7 ist der Raumbereich des Getriebes gegen die Umgebung abgedichtet.

Der Stator 11 mit den Statorwicklungen 16 ist um die Rotorwelle 13 herum angeordnet.

Dieser Elektromotor ist als Mehrphasen-Synchronmotor ausgeführt. Es sind jedoch bei anderen erfindungsgemäßen Ausführungsbeispielen auch beliebige andere Motoren statt des Synchronmotors integrierbar in den Kompaktantrieb.

Der auf der Rotorwelle laufende, in das Gehäuseteil 22 eingesetzte Wellendichtring 15 dichtet den Raumbereich des Getriebes vom Raumbereich des Motors ab.

Der Elektronikraumbereich 17 für den Umrichter ist zum Raumbereich des Motors nicht abgedichtet.

Der Motor trägt an seinem einen axialen Ende einen Resolver, der einen Resolverstator 19 und einen Resolverrotor 23 umfasst.

Bei anderen erfindungsgemäßen Ausführungsbeispielen sind statt des Resolvers auch andere Winkelsensoren oder Winkelgeschwindigkeitssensoren vorsehbar. Auch ist bei anderen erfindungsgemäßen Ausführungsbeispielen an der dem Winkelsensor gegenüberliegenden Seite eine Bremse in den Kompaktantrieb integrierbar.

Bei wiederum anderen erfindungsgemäßen Ausführungsbeispielen ist der Umrichter derart betrieben, dass mittels eines Verfahrens der Winkelwert geschätzt wird unter Verwendung eines geeigneten Motor-Modells. Somit ist weitere axiale Baulänge einsparbar.

In der Figur 2 ist eine andere Variante eines erfindungsgemäßen Ausführungsbeispiels gezeigt, bei dem der Elektronikraumbereich 31 nicht direkt zum Raumbereich des Motors ist sondern die Abtriebswelle 8 dazwischen liegt. In diesem Beispiel dichtet dann der Wellendichtring 5 den Raumbereich des Getriebes gegen den Elektronikraumbereich 31 ab, wobei der Wellendichtring 5 auf der Abtriebswelle 8 läuft und im Gehäuseteil 21 sitzt.

Der Getrieberaumbereich ist mit Schmierstoff, wie Schmieröl, Schmierfett oder dergleichen, befüllbar.

Bei den gezeigten erfindungsgemäßen Ausführungsbeispielen ist keine wesentliche Wärmedämmung zwischen den Raumbereichen des Umrichters, also dem Elektronikraumbereich, und dem Getriebe-Raumbereich sowie dem Motorraumbereich vorgesehen. Somit liegen die Raumbereiche auf ungefähr einem gleichen Temperaturniveau. Ein ungefähr gleiches Temperaturniveau bedeutet einen Temperaturunterschied von maximal 10 ° Celsius im Dauerbetrieb mit Nennlast. Selbstverständlich ist bei stoßartigem Betrieb kurzfristig eine größere Temperaturdifferenz der Raumbereiche erreichbar. Vorteilig und überraschend ist bei dieser Ausführung, dass keine spezielle Wärmedämmung nötig ist und somit Material, Masse und Kosten einsparbar sind.

Bei anderen erfindungsgemäßen Ausführungsbeispielen sind auch Wärmedämmungen zwischen zweien oder mehreren der Raumbereiche vorsehbar.

Bei weiteren erfindungsgemäßen Ausführungsbeispielen ist der Motor hochpolig ausgeführt, insbesondere acht- oder zehnpolig. Der Motor ist vorteiligerweise nach Art der DE 100 49 883 ausgeführt oder nach Art der DE 103 17 749. Somit ist im Kompaktantrieb eine einzige Getriebestufe zusammen mit einem solchen Mehrphasenmotor ausreichend, um einen weiten Bereich an Übersetzungszahlen zu überdecken.

Bei weiteren erfindungsgemäßen Ausführungsbeispielen ist als Abtriebswelle keine Hohlwelle sondern ein zylindrischer Wellenstumpf ausgeführt, wobei diese Abtriebswelle mittels Passfederverbindung mit der anzutreibenden Vorrichtung verbindbar ist.

Bei weiteren erfindungsgemäßen Ausführungsbeispielen ist die Abtriebswelle und das abtriebsseitige Gehäuseteil nach Art der Roboterschnittstelle EN-ISO 9402 - 1 ausgeführt. Somit ist axiale Baulänge einsparbar und ein hohes Drehmoment übertragbar. Außerdem ist Kompatibilität mit entsprechenden, anzutreibenden und anzuschließenden Vorrichtungen erreicht.

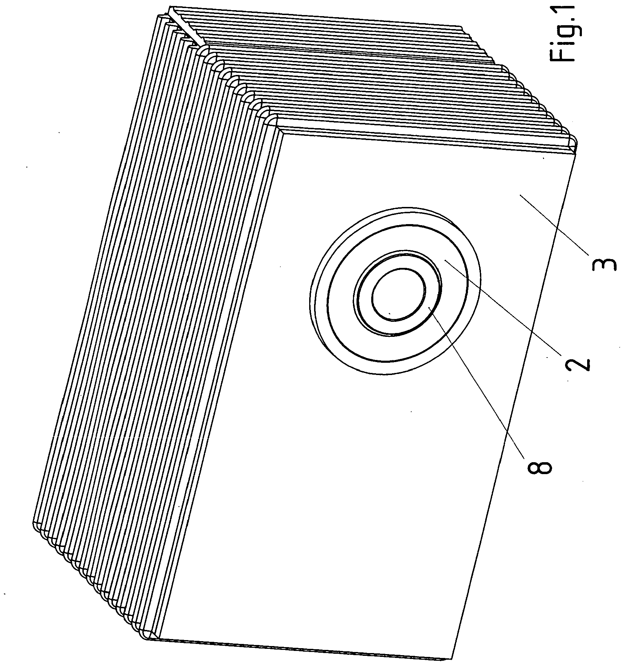

Die elektrischen Anschlussvorrichtungen sind auf der Rückseite des Gehäuses vorgesehen und daher in den Figuren 1 bis 4 nicht sichtbar. Bei weiteren erfindungsgemäßen Ausführungsbeispielen sind jedoch auch andere Positionen für die Anschlussvorrichtungen vorsehbar.

Bei weiteren erfindungsgemäßen Ausführungsbeispielen sind die Anschlussvorrichtungen nur als Energieversorgung ausgeführt. Insbesondere sind nur Starkstromkabel zum Kompaktantrieb geführt. Die für die Datenkommunikation notwendige Übertragung von Daten zum oder vom Umrichter zu einer anderen, insbesondere übergeordneten Einheit, erfolgt dabei mittels Aufmodulation auf die Leistungsleitungen. Die Aufmodulation ist in bekannter Weise ausführbar, insbesondere wie aus der Powerline-Kommunikation oder nach dem FSK oder nach dem FH/PSK-Verfahren, also mache dem Frequency Hopping Phase Shift Keying, bekannt.

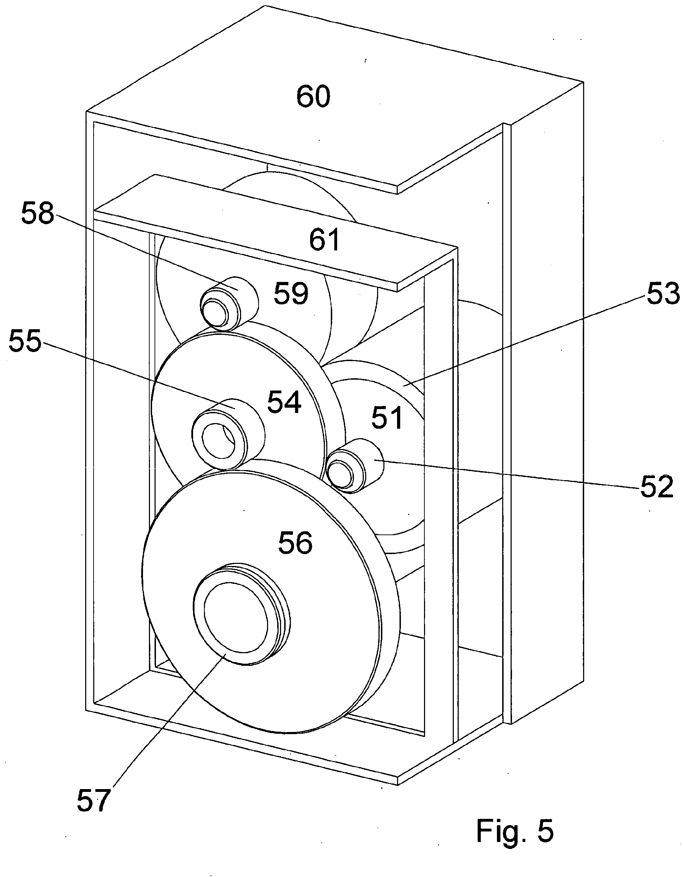

In der Figur 5 ist ein weiteres erfindungsgemäßes Ausführungsbeispiel gezeigt, bei dem das Gehäuse 60 einen mittels einer Gehäusewand 53 abgetrennten Bereich für den Elektromotor 51 aufweist. Der Elektromotor weist als erstes Verzahnteil 52 der ersten Getriebestufe ein Ritzel auf, das mit der Rotorwelle des Elektromotors 51 formschlüssig oder kraftschlüssig verbunden ist und mit einem auf einer Zwischenwelle verbundenen zweiten Verzahnteil 54 der ersten Getriebestufe im Eingriff steht. Diese Zwischenwelle ist wiederum mit einem weiteren Verzahnungsteil, nämlich dem ersten Verzahnteil 55 der zweiten Getriebestufe, verbunden, das mit dem zweiten Verzahnteil 56 der zweiten Getriebestufe im Eingriff steht. Dieses Verzahnteil 56 ist mit der Abtriebs-Hohlwelle 57 verbunden, die ein kompaktes Verbinden mit einer anzutreibenden Vorrichtung ermöglicht. Wesentlich ist nun, dass eine Bremse 59 einen Bremsrotor umfasst, der mit einem Ritzel als Verzahnungsteil 58 verbunden ist, das mit dem zweiten Verzahnungsteil der ersten Getriebestufe im Eingriff steht. Der Elektromotor 51 ist also ohne Bremse ausgeführt. Die Bremse 59 übt ihre Bremswirkung über das Ritzel 58 auf ein Verzahnungsteil aus. Die Bremswirkung ist sozusagen nicht direkt sondern indirekt ausgeführt.

Wesentlich bei der Ausführungsform nach Figur 5 ist auch, dass der Getriebebereich abgedichtet ausgebildet ist gegenüber dem Bereich des Elektromotors und der Bremse. Der Bereich der Bremse und des Motors müssen zueinander nicht abgedichtet sein. Die Bereiche sind in entsprechende Gehäusetaschen eingeordnet, deren Wände die Gehäusewände sind. Der Elektronikbereich, also der Umrichterbereich, ist auch abdichtbar gegen die anderen Bereiche, insbesondere gegen den Getriebebereich. Zum Motorbereich hin ist vom Elektronikbereich her keine absolute Abdichtung notwendig. Auch die Kabeldurchführungen vom Elektronikbereich zum Motorenbereich und gegebenenfalls zum Getriebebereich sind dicht und in hoher Schutzart ausgeführt.

Die Verzahnungsparameter in Figur 5 sind derart wählbar, dass das auf die Rotorwelle übertragene Bremsmoment der Bremse kleiner, größer oder gleich dem Motor-Nennmoment ist. Insbesondere bei einer Auslegung, bei der das übertragene Bremsmoment größer ist als das Motor-Nennmoment, ist die Bremse sehr klein und kompakt ausführbar. Somit wird Bauvolumen einsparbar.

Bei den Figuren 1 bis 5 ist klar ersichtlich, dass das Gehäuse des Kompaktantriebs im Wesentlichen quaderförmig ausgeführt ist. Da die Hohlwellenabtriebsachse in Normalenrichtung zur größten Fläche des Quaders orientiert ist, ist der Antrieb verwendbar in Applikationen, die üblicherweise Winkelantrieben vorbehalten sind. Die Kompaktheit des erfindungsgemäßen Antriebs ist insbesondere auch bewirkt durch die Anordnung der Rotorachse, nämlich in paralleler Orientierung zur Abtriebswelle des Kompaktantriebs.

Bei weiteren erfindungsgemäßen Ausführungsbeispielen ist statt der quaderförmigen Ausführung auch eine ähnliche Ausführung des Gehäuses vorteilhaft, wobei allerdings im Bereich der Abtriebswelle der Quader eine wesentliche Ausnehmung aufweist. Auf diese Weise ist zwar der Abstand der Abtriebslager verringert und somit die Steifheit gegen Querkräfte ebenfalls, aber es ist genügend Bauraum zur Verbindung mit der anzutreibenden Welle vorhanden.

Darüber hinaus ist mit dem erfindungsgemäßen Kompaktantrieb ein besserer Wirkungsgrad als bei Winkelmotoren erreichbar, da Stirnradgetriebe verwendbar sind. Solche haben nämlich stets einen besseren Wirkungsgrad als Winkelgetrieben.

Bei der Erfindung ist auch sehr wichtig, dass das Gehäuse des gesamten Kompaktantriebs ein zentrales Gehäuseteil aufweist, welches Gehäusefunktion für Motor, Getriebe und Elektronik ausführt. Auf das Gehäuseteil werden nur Gehäusedeckel verbunden. Das zentrale Gehäuseteil umfasst Lagerstellen für das Getriebe und für den Motor. Es ist auch an seiner Innenseite in Kontakt mit Schmierstoff des Getriebes. Außerdem ist das Blechpaket des Stators des Motors gehalten im zentralen Gehäuseteil. Aber nicht nur der Schmierstoff des Getriebes und die Statorwicklungen stehen somit in guter wärmeleitender Verbindung mit dem zentralen Gehäuseteil sondern auch die Elektronik, umfassend ein Bremswiderstand. Bei dem Teil der Elektronik, die nicht den Bremswiderstand umfasst, ist allerdings ein Gehäusedeckel wärmeleitend verbunden zur Abfuhr der Wärme der Elektronik an die Umgebung.

Weil das zentrale Gehäuseteil zumindest mit allen drei Antriebskomponenten in guter wärmeleitender Verbindung steht und somit jede Antriebskomponente Wärme an das zentrale Teil abgeben kann. Da das zentrale Teil sehr groß ist, hat es eine hohe Wärmekapazität und kann daher kurzfristige Spitzen an von den Antriebskomponenten zu ihm fließenden Wärmeströmen aufnehmen. Dies ist besonders von Vorteil, weil die verschiedenen Antriebskomponenten bei verschiedenen Betriebszuständen verschiedene Wärmeverlustleistungen aufweisen.

Beispielsweise ist beim Anfahren des Antriebs im Bereich des Losbrechmoments die Wärmeproduktion des Motors sehr groß. Allgemein gesprochen, ist die Wärmeproduktion des Motors drehmomentabhängig. Die Wärmeproduktion des Getriebes ist hingegen drehzahlabhängig, also erst später mit zunehmender Drehzahl relevant.

Vorteil des gemeinsamen zentralen Gehäuseteils ist also, dass eine große Masse vorhanden ist und somit ein guter Wärmeausgleich zwischen den Antriebskomponenten stattfindet.

Wegen des zentralen Gehäuseteils entfallen dann Schnittstellen zwischen den Antriebskomponenten, also sind auch weniger Bauteile, wie Gehäuseteile, Dichtungen, Schrauben und dergleichen, notwendig und der gesamte Antrieb ist kompakter ausführbar. Wichtig ist dabei auch, dass die üblicherweise bei Schnittstellen notwendigen Bearbeitungsschritte entfallen.

Bei weiteren erfindungsgemäßen Ausführungsbeispielen werden Verzahnungsteile von Getrieben eines Getriebebaukastens für Getriebestufen des Kompaktantriebs wiederverwendet. Somit ist die Anzahl der herzustellenden Verzahnungsteile insgesamt geringer.

Bei weiteren erfindungsgemäßen Ausführungsbeispielen ist ein Geber mechanisch mit der Abtriebswelle und elektrisch mit dem Elektronikbereich verbunden. Der Geber ist ein Winkellagegeber und/oder ein Drehmomentengeber. Somit ist die Regel-Software im Umrichter mit besonders guten Regeleigenschaften ausführbar.

Bei weiter vorteilhafter Ausgestaltung weist der Kompaktantrieb an der Vorderseite und an der Rückseite dieselbe mechanische Schnittstelle auf zur Verbindung mit einer anzutreibenden Vorrichtung. Dazu ist die Abtriebswelle als von Vorderseite bis Rückseite durchgehende Hohlwelle ausgeführt. Somit ist der Kompaktantrieb von beiden Seiten in eine Anlage oder Maschine einbaubar. Darüber hinaus ist auch eine Serienschaltung von Kompaktantrieben ausführbar, wodurch das Drehmoment insgesamt erhöhbar ist.

Bei weiter vorteilhafter Ausgestaltung ist der Elektromotor als Synchronmotor ausgeführt. Somit sind Schlupfverluste reduzierbar und die Regelgenauigkeit verbesserbar.

Bei anderer vorteilhafter Ausgestaltung ist der Elektromotor als Reluktanzmotor in kostengünstiger Weise ausführbar.

Bei anderen erfindungsgemäßen Ausführungsbeispielen ist statt der Bremse ein anderer Energiespeicher ausgeführt, also beispielsweise ein Schwungrad oder eine andere Schwungmasse. Dazu ist die Verzahnung des Ritzels der Bremse derart mit der mit ihr in Eingriff stehenden Verzahnung ausgelegt, dass die Schwungmasse sich mit hoher Drehzahl dreht, insbesondere zur Einsparung von Bauraum.

Bei anderen erfindungsgemäßen Ausführungsbeispielen ist die Bremse mit ihrem Ritzel statt mit dem zweiten mit dem ersten Verzahnungsteil im Eingriff und übt somit die Bremswirkung direkter aus.

Bei anderen erfindungsgemäßen Ausführungsbeispielen ist eine Getriebestufe, insbesondere die abtriebsseitigste, als Winkelgetriebestufe, insbesondere als Schneckengetriebestufe oder Spiroplangetriebestufe, ausgeführt. Somit sind besonders kompakte Bauformen ermöglicht.

Bei vorteilhafter Ausgestaltung der Erfindung grenzt der Elektronikbereich an den Getriebebereich und ist von diesem nur mit einer Gehäusewand getrennt. Daher ist die von der Elektronik erzeugte Wärme über die Gehäusewand and den Schmierstoff des Getriebes abführbar. Die Zirkulation des Schmierstoffes, die durch die Bewegung der Verzahnungsteile vergrößert wird, ist somit ein entscheidendes Mittel zum Abtransport der Wärme an die Umgebung. Denn vom Schmierstoff wird die Wärme zu den anderen Gehäusewänden des Getriebebereiches transportiert und von dort abgegeben an die Umgebung. Auf dieselbe Weise ist Wärme abtransportierbar, wenn der Motorbereich über eine Gehäusewand an den Getriebebereich angrenzt.

Wie in den Figuren 2 bis 5 klar erkennbar ist, ist der Bereich der Elektronik in der Nähe des Bereichs des Motors angeordnet. Somit ist im Elektronikbereich, insbesondere auf einer Leiterplatte der Elektronik selbst, ein Sender oder mehrere Sensoren vorsehbar. Dieser Sensor detektiert je nach Art und Weise der Anbringung des Sensors an der Leiterplatte somit Werte von Zustandsgrößen im Elektronik- oder Motorbereich. Dazu ist zumindest ein Teilbereich des Übergangs des Bereiches der Elektronik zum Bereich des Motors offen ausgeführt. Wird also der Gehäusedeckel mit der Elektronik auf das zentrale Gehäuseteil aufgesetzt, wird der mit der Elektronik verbundene Sensor richtig positioniert.

Als Sensoren sind einerseits Temperatursensoren und andererseits Winkel- oder Winkelgeschwindigkeitssensoren vorteilhaft vorsehbar. Als Winkelsensoren sind beispielsweise Hallsensoren verwendbar, die das magnetische Feld der Permanentmagnete des Rotor detektieren. Auf diese Weise lassen sich die Winkel- und/oder Winkelgeschwindigkeits-Informationen direkt am Rotor erfassen.

Bei Verwendung eines Temperatursensors ist eine Überwachung der Temperatur ausführbar. Es ist aber auch eine Steuerung der Temperatur dadurch ausführbar, dass die an den Bremswiderstand zugeführte Leistung vorgegeben wird und/oder die an den Motor übertragene Leistung. Es ist damit insgesamt selbstverständlich sogar eine Regelung der Temperatur ausführbar.

Zur Erreichung eines hohen Drehmomentes sind die Statorwicklungen als Zahnwicklungen ausgeführt, also sind auf jeden Zahn jeweils Wicklungen aufgeschoben oder um diesen herum gewickelt, insbesondere zur Erreichung hoher Momente und hoher Wirkungsgrade.

Darüber hinaus ist im Bereich der Elektronik eine Gehäusewand des zentralen Gehäuseteils vorsehbar, an der der Bremswiderstand derart anbringbar ist, dass er sehr gut wärmeleitend mit der Gehäusewand und dem auf der anderen Seite dieser Wand sich befindenden Schmierstoff des Getriebes verbunden ist. Bei weiteren erfindungsgemäßen Ausführungsbeispielen ist eine Gehäusetasche zur Aufnahme des Bremswiderstandes ausgebildet. Mit dem Bremswiderstand ist eine Beheizung des Kompaktantriebs erzielbar, die die Möglichkeiten der Heizung der Statorwicklungen mittels einer überlagerten Gleichstromkomponente übertrifft. Somit ist der Kompaktantrieb auch bei sehr tiefen Temperaturen einsetzbar.

Darüber hinaus ist im Bereich der Elektronik ein elektronisches Typenschild vorgesehen, also ein beschreibbarer Speicher, der Daten des Antriebs sowie auch Zustandsdaten oder Wartungs- und Diagnose-Informationen speichert. Das Speichern ist auch ohne äußere Energieversorgung ausführbar. Insbesondere sind Daten speicherbar, die sich beziehen auf Temperatur, Drehzahl und/oder Drehmoment. Das Abspeichern und/oder Summieren der mit der jeweiligen Temperatur gewichteten Zeitabschnitte kann dabei zum Bestimmen des Schmierstoffwechselintervalls herangezogen werden.

Bei anderen erfindungsgemäßen Ausführungsbeispielen umfasst das Blechpaket Zähne, auf die die Statorwicklungen aufgeschoben sind oder um die die Statorwicklungen herumgewickelt sind. Vorteiligerweise sind somit bei geringen Fertigungskosten hohe Drehmomente und ein hoher Wirkungsgrad des Motors erreichbar.

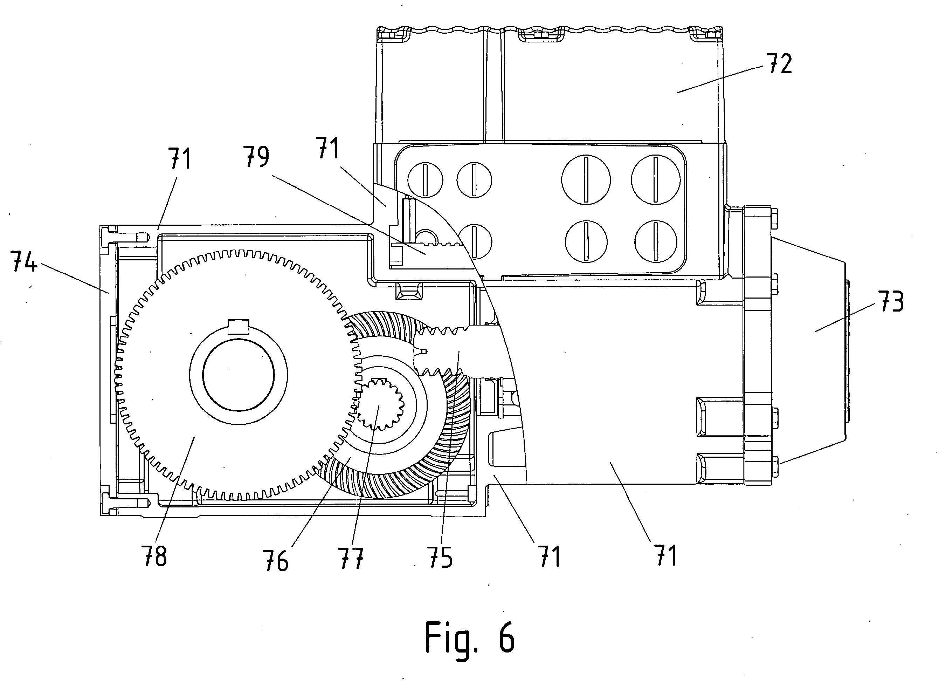

In der Figur 6 ist ein weiteres erfindungsgemäßes Ausführungsbeispiel gezeigt, bei dem keine Bremse vorgesehen ist und die Abtriebsachse des Antriebs senkrecht zur Rotorachse angeordnet ist. Somit ist ein kompakter Winkelantrieb realisiert. Das zentrale Gehäuseteil 71 führt gehäusebildende Funktion aus für den Elektronik-Bereich, den Bereich des Motors und den Bereich des Getriebes.

Der Gehäusedeckel 72 umfasst eine Aufnahme für eine Leiterplatte, die mittels Steckverbinder mit einer weiteren Leiterplatte, welche im zentralen Gehäuseteil 71 aufgenommen und verbunden ist, verbindbar ist.

Der Gehäusedeckel 73 ist abnehmbar, wodurch der Motor, umfassend Stator-Blechpaket, Statorwicklungen und auch Rotorwelle, im zentralen Gehäuseteil 71 einbaubar ist.

Der Gehäusedeckel 74 ist ebenfalls abnehmbar, wodurch das Getriebe montierbar ist und/oder Schmierstoff einfüllbar ist.

Das Getriebe ist zweistufig aufgebaut, wobei die eintreibende Stufe eine Spiroplangetriebestufe ist und die abtreibende Stufe eine Stirnradstufe. Das mit der Rotorwelle des Motors verbundene Spiroplan-Ritzel 75 weist eine zylindrische Einhüllende auf und ist mit einem Achsversatz zur Achse des mit dem Ritzel 75 im Eingriff stehenden Spiroplan-Zahnrads 76 vorgesehen. Die abtreibende Stufe ist aus den Zahnrädern 77 und 78 gebildet.

Durch die gezeigte Ausführungsform ist ein besonders kompakter Antrieb, insbesondere Umrichter-Getriebemotor, ausführbar.

Die eintreibende Spiroplanstufe ermöglicht wegen des Achsversatzes das Einhalten einer geringen Überfahrhöhe. Dies bedeutet beispielsweise, dass die abtreibende Achse ein Rad antreiben kann, das ein Band trägt und antreibt, welches unter dem erfindungsgemäßen Kompaktantrieb verläuft und nicht vom Motorgehäuse gestört wird. Denn der Motor ist wegen des Achsversatzes in Figur 6 höher angeordnet als die Unterkante des Getriebes. Dabei ist in Figur 6 der Elektronikbereich "oben" und die Unterkante des Getriebes "unten".

Wenn ein Kegelgetriebe als eintreibende Stufe verwendet würde, wäre nur ein Motor geringerer Leistung und somit kleinerer Bauart verwendbar. Bei der Erfindung hingegen wird ein Motor mit großem Drehmoment einsetzbar, da mittels des Achsversatzes Platz geschaffen ist, ohne die Überfahrhöhe zu reduzieren.

Wegen der Optimierung der Überfahrhöhe haben die Räder 78 und 76 einen möglichst geringen Abstand zur Unterkante des Getriebes.

Das zentrale Gehäuseteil ist im Motorbereich höher ausgeführt als die untere Seite des Getriebes, also Unterkante des Getriebes, welche auf der vom Elektronikbereich abgewandten Seite vorgesehen ist.

Bei der Spiroplangetriebestufe schneidet die Ritzelachse die Radachse nicht und ist senkrecht zu ihr angeordnet, wobei der Achsversatz kleiner ist als der Grundkreisradius der Verzahnung des Rades. Somit sind hohe Wirkungsgrade erreichbar, obwohl ein Achsversatz vorgesehen ist. Die Einhüllende des Ritzels ist ein Zylinder, also kein Kegel. Dies steht im Gegensatz zu Kegelgetriebestufen.

Erfindungsgemäß ist der Bremswiderstand 79 in einer Vertiefung des zentralen Gehäuseteils 71 angeordnet, die in den Getriebebereich hineinragt. Somit ist die durch die Gehäusewand des Gehäuseteils hindurchtretende Wärme vom Schmierstoff schnell und leicht verteilbar, wodurch die Wärme schnell über das zentrale Gehäuseteil hinweg aufspreizbar ist. Besonders vorteilig ist dabei noch darüber hinaus, dass die Gehäusetasche in der Nähe der eintreibenden Seite, also näher an der eintreibenden als an der abtreibenden Seite, in den Getriebebereich hineinragt, Denn hier ist die Bewegung der Verzahnteile schneller und somit die Bewegungsgeschwindigkeiten des Schmierstoffs ebenfalls, was zu einem schnellen Abführen der Wärme des Bremswiderstandes führt.

Im Gehäusedeckel 73 ist ein Winkelgeber integrierbar. Bei noch vorteilhafteren Ausführungen der Erfindung ist aber ein Geber einsparbar und ersetzt durch ein geberloses Steuer- und Regelverfahren im Umrichter, insbesondere geeignet ausgeführt für Synchronmotoren. Auf diese Weise ist der Gehäusedeckel 73 kleiner ausführbar.

### Bezugszeichenliste

- 1: Lager
- 2: Wellendichtring
- 3: Gehäusedeckel
- 4: Kühlvorrichtungen
- 5: Wellendichtring
- 6: Lager
- 7: Wellendichtring
- 8: Abtriebswelle
- 9: Lager
- 10: Zahnrad
- 11: Stator
- 12: Permanentmagnete
- 13: Rotorwelle
- 14: Ritzel
- 15: Wellendichtring
- 16: Statorwicklung
- 17: Elektronikraumbereich
- 18: Lager
- 19: Resolverstator
- 20: Lager
- 21: Gehäuseteil
- 22: Gehäuseteil
- 23: Resolverrotor
- 31: Elektronikraumbereich
- 40: Getriebe
- 51: Elektromotor
- 52: erstes Verzahnteil der ersten Getriebestufe
- 53: Motorgehäusewand
- 54: zweites Verzahnteil der ersten Getriebestufe
- 55: verbundenes erstes Verzahnteil der zweiten Getriebestufe
- 56: zweites Verzahnteil der zweiten Getriebestufe
- 57: Abtriebs-Hohlwelle
- 58: Verzahnungsteil
- 59: Bremse
- 60: Gehäuse
- 61: Gehäusewand
- 71: zentrales Gehäuseteil
- 72: Gehäusedeckel
- 73: Gehäusedeckel
- 74: Gehäusedeckel
- 75: Spiroplan-Ritzel
- 76: Spiroplan-Zahnrad
- 77: Zahnrad
- 78: Zahnrad
- 79: Bremswiderstand

## Patentansprüche

1. Kompaktantrieb,
umfassend zumindest drei Antriebskomponenten, darunter wenigstens ein Elektromotor, ein Getriebe und eine elektronische Schaltung, insbesondere Umrichter,
wobei ein zentrales Gehäuseteil vorgesehen ist,
wobei jede Antriebskomponente zur Bildung eines jeweiligen Gehäuses von dem zentralen Gehäuseteil und zumindest einem Gehäusedeckel der jeweiligen Antriebskomponente umgeben ist,
wobei der Stator des Elektromotors lösbar verbunden ist, insbesondere mittels einer Klemmverbindung, mit dem zentralen Gehäuseteil,
wobei das Blechpaket des Stators des Motors, umfassend Statorwicklungen, im zentralen Gehäuseteil lösbar verbunden ist,
wobei die Rotorwelle und mindestens eine Welle des Getriebes im selben Gehäuseteils gelagert sind,
wobei ein Bremswiderstand in einer Gehäusetasche des zentralen Gehäuseteils (71) angeordnet ist,
wobei der Bremswiderstand in den Getriebebereich derart hineinragt, dass die Gehäusetasche näher an der eintreibenden als an der abtreibenden Seite angeordnet ist.

2. Kompaktantrieb nach Anspruch 1,
**dadurch gekennzeichnet, dass**
mindestens eine Getriebestufe als Stirnradgetriebestufe ausgeführt ist,
und dass die abtriebsseitigste Getriebestufe als Winkelgetriebestufe, insbesondere als Schneckengetriebestufe, Kegelgetriebestufe oder Spiroplangetriebestufe, ausgeführt ist,
und dass die Getriebestufe als Verstellgetriebe ausgeführt ist, insbesondere als Breitkeilriemengetriebe oder Kettenantrieb,

3. Kompaktantrieb nach Anspruch 1 oder 2,
**dadurch gekennzeichnet, dass**
der Elektromotor ein Synchronmotor ist,
und dass der Umrichter seitlich von der Rotorwelle angeordnet ist,
und dass der Getriebebereich gegen die Umgebung und gegen den Bereich des Motors sowie gegen den Elektronikraumbereich abgedichtet ist.

4. Kompaktantrieb nach mindestens einem der vorangegangenen Ansprüche,
**dadurch gekennzeichnet, dass**
der Motor einen Geber, insbesondere umfassend einen Resolver-Stator und einen ResolverRotor, umfasst.

5. Kompaktantrieb nach mindestens einem der vorangegangenen Ansprüche,
**dadurch gekennzeichnet, dass**
Rotorwelle und mindestens eine Welle des Getriebes im selben Gehäuseteil gelagert sind,
- wobei nur ein einziger Wellendichtring auf der Rotorwelle läuft
- oder wobei drei Wellendichtringe auf der Abtriebswelle laufen,
und dass das Gehäuse aus Gehäuseteilen und Gehäusedeckeln zusammengesetzt ist, insbesondere einem oder zwei zentralen Gehäuseteilen und einem Gehäusedeckel.

6. Kompaktantrieb nach mindestens einem der vorangegangenen Ansprüche,
**dadurch gekennzeichnet, dass**
ein Gehäusedeckel mit einer elektronischen Schaltung verbunden ist oder eine elektronische Schaltung im Gehäusedeckel integriert ist.

7. Kompaktantrieb nach Anspruch 6,
**dadurch gekennzeichnet, dass**
der Gehäusedeckel mit der elektronischen Schaltung elektrisch mittels elektrischem Steckverbinder mit dem restlichen Kompaktantrieb verbunden ist, insbesondere zur schnellen und einfachen Austauschbarkeit des Gehäusedeckels bei Wartungsarbeiten oder Reparaturen.

8. Kompaktantrieb nach Anspruch 6 oder 7,
**dadurch gekennzeichnet, dass**
der Gehäusedeckel für die elektronische Schaltung lösbar verbindbar ist mit dem zentralen Gehäuseteil, wobei eine Wärmesperre bei der Verbindung vorgesehen ist.

9. Kompaktantrieb nach mindestens einem der vorangegangenen Ansprüche,
**dadurch gekennzeichnet, dass**
die Wärmesperre als Dichtung oder als Kunststoffteil-Gehäuseteil ausgebildet ist.

10. Kompaktantrieb nach mindestens einem der vorangegangenen Ansprüche,
**dadurch gekennzeichnet, dass**
der Gehäusedeckel für die elektronische Schaltung mit seiner Normalenrichtung senkrecht zur Abtriebswelle ausgerichtet ist.

11. Kompaktantrieb nach mindestens einem der vorangegangenen Ansprüche,
**dadurch gekennzeichnet, dass**
elektrische Anschlussvorrichtungen für Leistungsleitungen an einem Gehäuseteil des Kompaktantriebs vorgesehen sind,
und dass der Kompaktantrieb zumindest eine elektronische Schaltung zur Aufmodulation oder Demodulation von Information auf die Leistungsleitungen umfasst, insbesondere nach dem Powerline, FSK oder ähnlichen Verfahren,
und dass mit der elektronischen Schaltung ein oder mehrere Sensoren verbunden sind, die beim Aufstecken des Gehäusedeckels derart positionierbar sind, dass Werte von physikalischen Größen des Bereichs des Motors, wie Temperatur, Winkelgeschwindigkeit des Rotors, Winkel des Rotors oder dergleichen, bestimmbar sind,
und dass die elektronische Schaltung derart gestaltet ist, dass eine Überwachung, Steuerung und Regelung der Temperatur des zentralen Gehäuseteils ausführbar ist,
und dass die elektronische Schaltung ein elektronisches Typenschild umfasst oder die elektronische Schaltung mit einem Bus, insbesondere Feldbus, verbunden ist.

12. Kompaktantrieb nach mindestens einem der vorangegangenen Ansprüche,
**dadurch gekennzeichnet, dass**
Bremswiderstand und Schmierstoff derart gut wärmeleitend verbunden sind, dass der Schmierstoff mittels des Bremswiderstandes heizbar oder erwärmbar ist,
und dass der Wärmeübergangswiderstand vom Bremswiderstand zum Schmierstoff, insbesondere zum im Betrieb bewegten Schmierstoff des Getriebes, kleiner ist als vom Bremswiderstand zur Umgebung,
und dass der Wärmeübergangswiderstand von einer der Statorwicklungen zum Schmierstoff, insbesondere zum im Betrieb bewegten Schmierstoff des Getriebes, kleiner ist als von der Statorwicklung zur Umgebung,

13. Kompaktantrieb nach mindestens einem der vorangegangenen Ansprüche,
**dadurch gekennzeichnet, dass**
das Blechpaket des Stators des Motors, umfassend Statorwicklungen, im zentralen Gehäuseteil gehalten ist,
und dass das Blechpaket des Stators des Motors, umfassend Statorwicklungen, im zentralen Gehäuseteil lösbar verbunden ist,
und dass das Blechpaket Zähne umfasst, auf die die Statorwicklungen aufgeschoben sind oder um die die Statorwicklungen herumgewickelt sind,
und dass das Blechpaket des Stators eines Winkelsensors oder Winkelgeschwindigkeitssensors im zentralen Gehäuseteil lösbar verbunden ist.

14. Kompaktantrieb nach mindestens einem der vorangegangenen Ansprüche, wobei das Getriebe eine Winkelgetriebestufe umfasst,
wobei ein zentrales Gehäuseteil vorgesehen ist,
wobei jede Antriebskomponente zur Bildung eines jeweiligen Gehäuses umgeben ist von dem zentralen Gehäuseteil und zumindest einem Gehäusedeckel der jeweiligen Antriebskomponente,
insbesondere wobei die Winkelgetriebestufe ein Rad und ein mit diesem in Eingriff stehendes Ritzel umfasst, wobei das Rad auf seiner Stirnseite mit einer Verzahnung versehen ist oder das Ritzel eine zylindrische Einhüllende an seinem Außenumfang aufweist,
und dass die Winkelgetriebestufe eine Spiroplangetriebestufe ist, insbesondere schneidet die Ritzelachse die Radachse nicht und ist senkrecht zu ihr angeordnet, wobei der Achsversatz kleiner ist als der Grundkreisradius der Verzahnung des Rades.

## Claims

1. A compact drive,
comprising at least three drive components, including at least an electric motor, a gear unit and an electronic circuit, in particular converter,
wherein a central housing part is provided,
wherein each drive component in order to form a respective housing is surrounded by the central housing part and at least one housing cover of the respective drive component,
wherein the stator of the electric motor is detachably connected, in particular by means of a clamping connection, to the central housing part,
wherein the laminated core of the stator of the motor, comprising stator windings, is detachably connected in the central housing part,
wherein the rotor shaft and at least one shaft of the gear unit are mounted in the same housing part,
wherein a braking resistor is arranged in a housing pocket of the central housing part (71),
wherein the braking resistor projects into the gear unit region such that the housing pocket is arranged closer to the input side than to the output side.

2. A compact drive according to Claim 1,
**characterised in that**
at least one gear stage is embodied as a helical gear stage,
and **in that** the gear stage farthest to the output side is embodied as a right-angled gear stage, in particular as a worm gear stage, bevel gear stage or Spiroplan gear stage,
and **in that** the gear stage is embodied as a variable-speed gear unit, in particular as a wide V-belt gear unit or chain drive.

3. A compact drive according to Claim 1 or 2,
**characterised in that**
the electric motor is a synchronous motor,
and **in that** the converter is arranged laterally to the rotor shaft,
and **in that** the gear unit region is sealed off from the surroundings and from the region of the motor and also from the electronics spatial region.

4. A compact drive according to at least one of the preceding claims,
**characterised in that**
the motor comprises an encoder, in particular comprising a resolver stator and a resolver rotor.

5. A compact drive according to at least one of the preceding claims,
**characterised in that**
the rotor shaft and at least one shaft of the gear unit are mounted in the same housing part,
- wherein only a single shaft sealing ring runs on the rotor shaft
- or wherein three shaft sealing rings run on the output shaft,
and **in that** the housing is composed of housing parts and housing covers, in particular of one or two central housing parts and a housing cover.

6. A compact drive according to at least one of the preceding claims,
**characterised in that**
one housing cover is connected to an electronic circuit or an electronic circuit is integrated in the housing cover.

7. A compact drive according to Claim 6,
**characterised in that**
the housing cover with the electronic circuit is electrically connected to the rest of the compact drive by means of an electrical plug-in connector, in particular for quick and simple exchange of the housing cover in the event of maintenance work or repairs.

8. A compact drive according to Claim 6 or 7,
**characterised in that**
the housing cover for the electronic circuit can be connected detachably to the central housing part, with a heat barrier being provided upon connection.

9. A compact drive according to at least one of the preceding claims,
**characterised in that**
the heat barrier is designed as a seal or as a plastics-material part housing part.

10. A compact drive according to at least one of the preceding claims,
**characterised in that**
the housing cover for the electronic circuit is oriented with its normal direction perpendicular to the output shaft.

11. A compact drive according to at least one of the preceding claims,
**characterised in that**
electrical connection devices for power cables are provided on a housing part of the compact drive,
and **in that** the compact drive comprises at least one electronic circuit for modulation or demodulation of information to the power cables, in particular in accordance with the power-line, FSK or similar methods,
and **in that** one or more sensors are connected to the electronic circuit, which sensors upon the housing cover being fitted on can be positioned such that values of physical variables of the region of the motor, such as temperature, angular velocity of the rotor, angle of the rotor or the like, can be determined,
and **in that** the electronic circuit is configured such that monitoring, control and regulation of the temperature of the central housing part can be carried out,
and **in that** the electronic circuit comprises an electronic rating plate or the electronic circuit is connected to a bus, in particular field bus.

12. A compact drive according to at least one of the preceding claims,
**characterised in that**
the braking resistor and lubricant are connected in such an effective thermally conductive manner that the lubricant can be heated or warmed by means of the braking resistor,
and **in that** the heat transfer resistance from the braking resistor to the lubricant, in particular to the lubricant of the gear unit which is moved during operation, is lower than that from the braking resistor to the surroundings,
and **in that** the heat transfer resistance from one of the stator windings to the lubricant, in particular to the lubricant of the gear unit which is moved during operation, is less than that from the stator winding to the surroundings,

13. A compact drive according to at least one of the preceding claims,
**characterised in that**
the laminated core of the stator of the motor, comprising stator windings, is held in the central housing part,
and **in that** the laminated core of the stator of the motor, comprising stator windings, is detachably connected in the central housing part,
and **in that** the laminated core comprises teeth onto which the stator windings are pushed or around which the stator windings are wound,
and **in that** the laminated core of the stator of an angular sensor or angular velocity sensor is detachably connected in the central housing part.

14. A compact drive according to at least one of the preceding claims, wherein the gear unit comprises a right-angled gear stage,
wherein a central housing part is provided,
wherein each drive component in order to form a respective housing is surrounded by the central housing part and at least one housing cover of the respective drive component,
in particular wherein the right-angled gear stage comprises a wheel and a pinion engaged therewith, the wheel being provided on its end face with toothing or the pinion having a cylindrical envelope on its outer periphery,
and in that the right-angled gear stage is a Spiroplan gear stage, in particular the pinion axis does not intersect the wheel axis, and is arranged perpendicularly thereto, the axial offset being smaller than the base circle radius of the toothing of the wheel.

## Revendications

1. Entraînement compact,
comprenant au moins trois composants d'entraînement, dont au moins un moteur électrique, une transmission et un circuit électronique, en particulier un convertisseur, sachant qu'il est prévu une partie centrale de boîtier,
sachant que chaque composant d'entraînement est, afin de former un boîtier respectif, entouré par la partie centrale de boîtier et par au moins un couvercle de boîtier du composant d'entraînement respectif,
sachant que le stator du moteur électrique est relié de manière amovible, en particulier au moyen d'une liaison par serrage, à la partie centrale de boîtier,
sachant que l'empilage de tôles du stator du moteur, comprenant des enroulements statoriques, est relié de manière amovible dans la partie centrale de boîtier,
sachant que l'arbre de rotor et au moins un arbre de la transmission sont montés dans la même partie de boîtier,
sachant qu'une résistance de freinage est disposée dans une poche de boîtier de la partie centrale de boîtier (71),
sachant que la résistance de freinage pénètre dans la région de la transmission de telle sorte que la poche de boîtier est disposée plus près du côté d'entrée que du côté de sortie.

2. Entraînement compact selon la revendication 1, **caractérisé en ce qu'**au moins un étage de transmission est réalisé sous forme d'étage de transmission à engrenage droit,
et **en ce que** l'étage de transmission du côté de sortie est réalisé sous forme d'étage de transmission à engrenage angulaire, en particulier sous forme d'étage de transmission à vis sans fin, d'étage de transmission à engrenage conique ou d'étage de transmission Spiroplan,
et **en ce que** l'étage de transmission est réalisé sous forme de variateur, en particulier sous forme de transmission à courroie trapézoïdale large ou d'entraînement à chaîne.

3. Entraînement compact selon la revendication 1 ou 2, **caractérisé en ce que** le moteur électrique est un moteur synchrone,
et **en ce que** le convertisseur est disposé sur le côté de l'arbre de rotor,
et **en ce que** la région de transmission est rendue étanche vis-à-vis de l'environnement et vis-à-vis de la région du moteur ainsi que vis-à-vis de la région du compartiment électronique.

4. Entraînement compact selon au moins une des revendications précédentes, **caractérisé en ce que** le moteur comprend un transducteur, comprenant en particulier un stator de résolveur et un rotor de résolveur.

5. Entraînement compact selon au moins une des revendications précédentes, **caractérisé en ce que** l'arbre de rotor et au moins un arbre de la transmission sont montés dans la même partie de boîtier,
- sachant qu'une unique bague d'étanchéité d'arbre tourne sur l'arbre de rotor,
- ou sachant que trois bagues d'étanchéité d'arbre tournent sur l'arbre de sortie,
et **en ce que** le boîtier est composé de parties de boîtier et de couvercles de boîtier, en particulier d'une ou deux parties centrales de boîtier et d'un couvercle de boîtier.

6. Entraînement compact selon au moins une des revendications précédentes, **caractérisé en ce qu'**un couvercle de boîtier est relié à un circuit électronique, ou un circuit électronique est intégré dans le couvercle de boîtier.

7. Entraînement compact selon la revendication 6, **caractérisé en ce que** le couvercle de boîtier pourvu du circuit électronique est relié électriquement au reste de l'entraînement compact au moyen de connecteurs électriques enfichables, en particulier en vue d'une possibilité de remplacement rapide et simple du couvercle de boîtier lors de travaux d'entretien ou de réparations.

8. Entraînement compact selon la revendication 6 ou 7, **caractérisé en ce que** le couvercle de boîtier pour le circuit électronique peut être relié de manière amovible à la partie centrale de boîtier, sachant qu'une barrière thermique est prévue au niveau de la liaison.

9. Entraînement compact selon au moins une des revendications précédentes, **caractérisé en ce que** la barrière thermique est réalisée sous forme de joint d'étanchéité ou sous forme de partie de boîtier en tant qu'élément en matière plastique.

10. Entraînement compact selon au moins une des revendications précédentes, **caractérisé en ce que** le couvercle de boîtier pour le circuit électronique est orienté avec sa direction normale perpendiculaire à l'arbre de sortie.

11. Entraînement compact selon au moins une des revendications précédentes, **caractérisé en ce que** des dispositifs de raccordement électrique pour des lignes de puissance sont prévus sur une partie de boîtier de l'entraînement compact,
et **en ce que** l'entraînement compact comprend au moins un circuit électronique pour la modulation ou démodulation d'informations sur les lignes de puissance, en particulier selon le procédé Powerline, MDF ou analogue,
et **en ce qu'**un ou plusieurs capteurs sont reliés au circuit électronique, qui peuvent être positionnés lors de l'emboîtement du couvercle de boîtier de telle sorte que des valeurs de grandeurs physiques de la région du moteur, comme la température, la vitesse angulaire du rotor, l'angle du rotor ou similaires, peuvent être déterminées,
et **en ce que** le circuit électronique est configuré de telle sorte qu'on peut effectuer une surveillance, une commande et une régulation de la température de la partie centrale de boîtier,
et **en ce que** le circuit électronique comprend une plaque signalétique électronique, ou le circuit électronique est relié à un bus, en particulier un bus de terrain.

12. Entraînement compact selon au moins une des revendications précédentes, **caractérisé en ce que** la résistance de freinage et le lubrifiant sont reliés en conduction thermique d'une qualité telle que le lubrifiant peut être chauffé ou réchauffé au moyen de la résistance de freinage,
et **en ce que** la résistance de transfert de chaleur de la résistance de freinage au lubrifiant, en particulier au lubrifiant de la transmission mis en mouvement en fonctionnement, est inférieure à celle de la résistance de freinage à l'environnement,
et **en ce que** la résistance de transfert de chaleur d'un des enroulements statoriques au lubrifiant, en particulier au lubrifiant de la transmission mis en mouvement en fonctionnement, est inférieure à celle de l'enroulement statorique à l'environnement.

13. Entraînement compact selon au moins une des revendications précédentes, **caractérisé en ce que** l'empilage de tôles du stator du moteur, comprenant des enroulements statoriques, est maintenu dans la partie centrale de boîtier,
et **en ce que** l'empilage de tôles du stator du moteur, comprenant des enroulements statoriques, est relié de manière amovible dans la partie centrale de boîtier,
et **en ce que** l'empilage de tôles comprend des dents, sur lesquelles sont enfilés les enroulements statoriques ou tout autour desquelles sont enroulés les enroulements statoriques,
et **en ce que** l'empilage de tôles du stator d'un capteur d'angle ou d'un capteur de vitesse angulaire est relié de manière amovible dans la partie centrale de boîtier.

14. Entraînement compact selon au moins une des revendications précédentes, sachant que la transmission comprend un étage de transmission à engrenage angulaire,
sachant qu'il est prévu une partie centrale de boîtier,
sachant que chaque composant d'entraînement est, afin de former un boîtier respectif, entouré par la partie centrale de boîtier et par au moins un couvercle de boîtier du composant d'entraînement respectif,
sachant en particulier que l'étage de transmission à engrenage angulaire comprend une roue et un pignon en prise avec celle-ci, sachant que la roue est pourvue d'une denture sur son côté frontal ou que le pignon présente une enveloppante cylindrique sur son pourtour extérieur,
et que l'étage de transmission à engrenage angulaire est un étage de transmission Spiroplan, en particulier l'axe du pignon ne coupe pas l'axe de la roue et est disposé perpendiculairement à ce dernier, sachant que le décalage de l'axe est inférieur au rayon du cercle de base de la denture de la roue.
